(19) Europäisches Patentamt
European Patent Office
Office européen des brevets

(11) Publication number: 0 108 366 B1

(12) # EUROPEAN PATENT SPECIFICATION

(45) Date of publication of patent specification: **04.03.87**

(51) Int. Cl.$^4$: **A 61 C 19/04,** G 01 B 5/24

(21) Application number: **83110846.9**

(22) Date of filing: **29.10.83**

(54) **Device for measuring and scraping operations in the field of restorative dentistry.**

(30) Priority: **05.11.82 JP 193526/82**

(43) Date of publication of application:
**16.05.84 Bulletin 84/20**

(45) Publication of the grant of the patent:
**04.03.87 Bulletin 87/10**

(84) Designated Contracting States:
**DE FR IT**

(56) References cited:
**CH-A- 249 402**
**DE-A-1 766 099**
**FR-A-2 446 629**
**US-A-2 544 097**

(73) Proprietor: **Sankin Kogyo Kabushiki Kaisha**
**3-10, 3-chome Minami-senba**
**Minami-ku Osaka-shi (JP)**

(72) Inventor: **Ai, Minoru**
**2-674-21, Oizumigakuen-cho Nerima-ku**
**Tokyo (JP)**
Inventor: **Manabe, Akira**
**Mezon Koishikawa 302 5-10-17, Koishikawa**
**BUnkyo-ku Tokyo (JP)**
Inventor: **Igarashi, Yoshimasa**
**1463, Furubuchi**
**Sagamihara-shi Kanagawa-ken (JP)**
Inventor: **Mizuno, Katsuya**
**4-52-3, Minamidai Nakano-ku**
**Tokyo (JP)**

(74) Representative: **Selting, Günther, Dipl.-Ing. et al**
**Deichmannhaus am Hauptbahnhof**
**D-5000 Köln 1 (DE)**

**EP 0 108 366 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a device for measuring and scraping operations in the field of restorative dentistry and more particularly to a device for

measuring a first inclination angle of the tapered surface of a plaster die duplicated from a prepared tooth, said plaster die being mounted on the horizontal base table of a parallelometer, the measurement being based on the extent of the pivoting movement of a tool in a vertical plane, which tool is secured to the mobile arm of the parallelometer by a tool holding means, and

for scraping a wax pattern on the plaster die so as to fabricate a tapered conical crown with a second inclination angle for the purpose of retaining a partial denture.

To remedy drawbacks inherent to the conventional parallel telescope crown technology in the field of restorative dentistry, Dr. Karheinz Körber in West Germany developed a new technology that is called "conus crown" technology about twenty years ago. This technology has been satisfactorily employed for partial denture. For applying the technology, a device for measuring an inclination angle of the tapered surface of a plaster die which forms a part of a partially worked model and scraping it to fabricate a tapered conical crown according to calculated inclination angle (hereinafter referred to simply as "device") was specially designed and fabricated by Dr. Körber and is disclosed in DE—A—17 66 099. This device is mounted on a parallelometer and is simple in structure, but it was found that it had a few problems. One of them is that the device has a long length and thereby it occupies a wide space on the table of the parallelometer. Another problem is that after a tool on the device is inclined due to contact with the tapered surface of a wax pattern, a measured inclination angle is indicated with less accuracy, because an indicator is designed in such a manner that an indicating needle is made integral with the tool secured to a tool holding means. The indicator is actuated by turning about a junction point in lever fashion.

In view of the first mentioned drawback of the conventional device, Dr. Körber made an improvement so as to reduce the length of the device. The improvement was made such that an indication needle was oriented in the lateral direction at a right angle relative to the tool but no improvement was achieved with respect to accuracy of measurement. Moreover, it was found that measuring and scraping operations were carried out with much difficulty due to the existence of the transversely extending indicating needle.

In CH—A—249 402 there is disclosed a device for measuring the angle between two planes. The device comprises two rings, each ring having one inclined end face. The rings are rotatably connected via a shaft so that its inclined end faces are contacting each other. For measuring an angle between two planes, the device is put therebetween and by turning the rings relative to each other, the other end faces of the rings are brought into contact with the planes so that the end faces are parallel to the planes. The measured angle is indicated on a scale. This device is not applicable for measuring the inclination angle of the tapered surface of a plaster die.

It is the object of the invention to provide a device of the above mentioned type which is designed and constructed in smaller dimensions, and a measured inclination angle can be visually recognized with high accuracy.

To accomplish the above object, there is proposed in accordance with the present invention a device of the above mentioned type which is characterized in that it comprises

- substantially vertical core means to which said tool holding means is connected by means of a support shaft having an axis perpendicular to that of said core means and about which said tool holding means can swivel, said tool holding means having a pair of lateral projections,
- a rotary ring rotatably fitted to said core means so that said rotary ring is coaxial with said core means, the lower planar end face of said rotary ring forming a predetermined inclination angle, and said rotary ring being provided with a measuring scale marked around its peripheral surface,
- resilient means normally urging the rotary ring towards the upper faces of the lateral projections of said tool holding means,
- fitting means which is firmly fitted to said parallelometer, threadably connected to said core means and acting as an abutment for said resilient means,
- and a lock ring rotatably fitted to said core means for inhibiting rotation of the rotary ring when said tool holding means is to be fixedly held.

In the "conus crown" technology, an inclination angle of the tapered surface of a plaster die duplicated from the prepared tooth is generally defined within 14 degrees in the light of hitherto encountered experiences and, therefore, the inclination angle of the lower inclined end face of the rotary ring is determined to 7 degrees whereby a tool attached to the tool holding means can be inclined within an extent of 14 degrees by rotating the rotary ring with the lock ring in a loosened state. By fastening the lock ring, the rotation of the rotary ring can be inhibited so that the tool held by the tool holding means can be firmly locked at any inclination angle. The device according to the invention can be simply operated and is small in size. The measured inclination angle can be usually recognized with a high accuracy.

According to a preferred embodiment of the invention, the upper surfaces of the wing-shaped lateral projections of the tool holding means are inclined at an inclination angle of 7 degrees, whereas the transversely extending shaft is inclined also at an inclination angle of 7 degrees.

The transversely extending shaft is disposed between the lower inclined end faceof the rotary ring and the upper faces of the wing-shaped lateral projections of the tool holding means so that the former comes into surface contact with the latter during rotation of the rotary ring. To achieve the aforesaid surface contact therebetween, both the upper faces of the wing-shaped lateral projections of the tool holding means are formed with a semi-cylindrical recess respectively on which the lower half of the transversely extending shaft is held so as to cause it to turn by a limited angle as the rotary ring is rotated and, moreover, both the end parts of the transversely extending shaft are cut to a flat face so that they are brought into slidable contact with the lower inclined end face of the rotary ring.

In another preferred embodiment of the invention, the resilient means for normally thrusting downwardly the rotary ring is constructed by a combination of a coil spring inserted into a drilled hole on the male thread portion of the core, a ring-shaped washer fitted onto the male thread portion of the core, said ring-shaped washer having a pair of inward projections located diametrically opposite to one another, and an intermediate member bridged between said inward projections of the ring-shaped washer. Thus, resilient force of the coil spring is transmitted to the rotary ring via the intermediate member and the ring-shaped washer.

The scale marks from zero to 14 degrees are marked around one half of the peripheral surface of the rotary ring and a reference line which can be located in vertical alignment with one of the marks is marked on one of the end faces of the transversely extending shaft.

To allow the calibration lines to be observed from any direction, one set of marks may be marked around each half of the peripheral surface of the rotary ring and one reference line may be marked on each end face of the transversely extending shaft. This assures that an inclination angle of a tool can be observed from any direction. In this case the sets of marks on both the halves of the peripheral surface of the rotary ring as well as the reference lines on both the end faces of the transversely extending shaft are marked with different colors. Typically, the set of marks on one half of the peripheral surface of the rotary ring and the corresponding reference line are colored with black, whereas the set of marks on the other half of the rotary ring and the corresponding reference line are colored with red.

Other objects, features and advantages of the invention will become more clearly apparent from reading of the following description which has been prepared in conjunction with the accompanying drawings.

The accompanying drawings will be briefly described below.

Fig. 1 is side view of a device in accordance with a preferred embodiment of the invention with a tool removed therefrom.

Fig. 2 is a front view of the device in Fig. 1.

Fig. 3 is a side view of the device, particularly illustrating that a rotary ring is rotated by 180 degrees and thereby a tool holding plate is inclined by 14 degrees.

Fig. 4 is a vertical section view of the device in Fig. 1, shown in an enlarged scale.

Fig. 5 is a perspective view of essential components constituting the device, shown in the disassembled state.

Fig. 6(a) is a side view of the tool holding plate with a tool attached thereto, illustrating that it is not inclined.

Fig. 6(b) is a side view of the tool holding plate in Fig. 6(a), illustrating that it is inclined by 7 degrees.

Fig. 6(c) is a side view of the tool holding plate in Fig. 6(a), illustrating that it is inclined by 14 degrees.

Fig. 7 is a perspective view of the rotary ring of which the lower end face is a planar surface forming 7 degrees with the vertical axis, particularly illustrating how measuring scales are marked on the peripheral surface of the rotary ring.

Fig. 8 is a schematic view illustrating how the scale marks are distributed over the peripheral surface of the rotary ring, and

Fig. 9 is a side view of a parallelometer with the device attached thereto, illustrating that the device is operated for a partial denture to be designed on a partially worked plaster model mounted on the table of the parallelometer.

Now, the present invention will be described in greater detail hereunder with reference to the accompanying drawings which illustrate a preferred embodiment of the invention.

As is best seen from Fig. 5, a device of the invention essentially comprises a rotary ring 1 the lower end face of which is cut to a predetermined inclination angle, that is, 7 degrees in the illustrated embodiment, a core 2 onto which said rotary ring 1 is rotatably fitted, a tool holding plate 11 inserted into a slot 12 formed on the lower part of the core 2 so as to turn about a support shaft 13 which is fixedly fitted to said tool holding plate 11, the latter having wing-shaped lateral projections of which the upper face extends at the same inclination angle as that of the lower inclined end face of the rotary ring 1 and has a semi-cylindrical recess formed thereon, a transversely extending shaft 16 inserted through holes 17 at the upper part of the tool holding plate 11 along the semi-cylindrical recesses on the upper faces of the wing-shaped lateral projections, a ring-shaped washer 5 having a pair of inward projections located diametrically opposite to one another, said projections being fitted into grooves 7 vertically extending across the male thread portion of the core 2, a lock ring 8 for inhibiting rotation of the rotary ring 1 at its lowermost end position and a fitting means 10 threadably fitted onto the male thread portion of the core 2.

To assure that the rotary ring 1 and the lock ring 8 can be easily rotated by an operator's hand they have a knurled portion respectively and the rotary ring 1 has a set of marks 25 impressed along the whole peripheral surface 24 thereof so as to indicate how a tool 20 is inclined. In the illustrated embodiment a mark indicating zero degree is located at the lefthand side of the peripheral surface 24 as seen in Fig. 1 and a mark indicating 14 degrees is located at the righthand side of the same. As is apparent from Fig. 8, an angular distance between the adjacent marks is not equal along the whole peripheral surface 24. It becomes largest between zero degree and one degree as well as 13 degrees and 14 degrees and it gradually decreases toward the middle part between zero degree and 14 degrees.

A coil spring 3 is received in a bore 6 on the male thread portion of the core 2 so that its resilient force is transmitted to the rotary ring 1 via a key-shaped intermediate member 4 and a washer 5 so as to allow the rotary ring 1 to be normally thrusted toward the flat faces on both the end portions 19 and 19' of the transversely extending shaft 16. To slidably receive the key-shaped intermediate member 4 a slot 7 is formed through the male thread portion of the core 2 in the transverse direction at the lower end part of the vertically extending grooves 7.

As is apparent from Fig. 4, there exists a very close clearance C between the fitting means 10 and the lock ring 8 when the latter is turned to the lowermost position to inhibit the rotary ring 1 form further rotation. As required, the lock ring 8 is turned in the opposite direction so as to be released from the locked state.

Since the laterally extending shaft 16 extends through the holes 17 on the tool holding plate 11 and the hole 18 on the support shaft 13 along the semi-cylindrical recess on the upper end faces of the wing-shaped lateral projections, it is inclined by the same inclination angle as that of the lower inclined face of the rotary ring 1 and its axis intersects with the axis of the support shaft 13 at a right angle relative to one another which is fixedly fitted to the tool holding plate 11.

Both the end portions 19 and 19' of the transversely extending shaft 16 are cut to a flat face which is normally brought into slidable contact with the lower inclined face of the rotary ring 1 while the latter is rotated. Thus, due to the slidable contact between the flat faces of the end portions 19 and 19' of the transversely extending shaft 16 and the lower inclined face of the rotary ring 1 the transversely extending shaft 16 is caused to rotate through a certain angular extent in the semi-cylindrical recesses on the upper faces of the wing-shaped lateral projections of the tool holding plate 11 as the rotary ring 1 is rotated. Provided that there exists no transversely extending shaft on the upper faces of the wing-shaped lateral projection of the tool holding plate 11, it will result that the lower inclined end face of the rotary ring 1 comes into direct contact with the upper surfaces of the wing-shaped projections of the tool holding plate 11 whereby they wear quickly because of the fact that line contact is achieved therebetween during rotation of the rotary ring 1.

To prevent occurance of line contact as described above there is provided the transversely extending shaft 16 between the rotary ring 1 and the tool holding plate 11, said transversely extending shaft 16 being caused to rotate through an appreciable angle on the semi-cylindrical recesses on the upper faces of the wing-shaped projections of the tool holding plate 11.

In Fig. 4 reference numeral 22 designates a cutout formed at the lower part of the lefthand wing-shaped lateral projection 15 so that a set screw 23 firmly holding a tool 20 on the tool holding plate 11 is accommodated in said cutout 22. Thus, the device can be handled without any hindrance due to the existance of projection such as set screw or the like means.

Operation of the device will be described below.

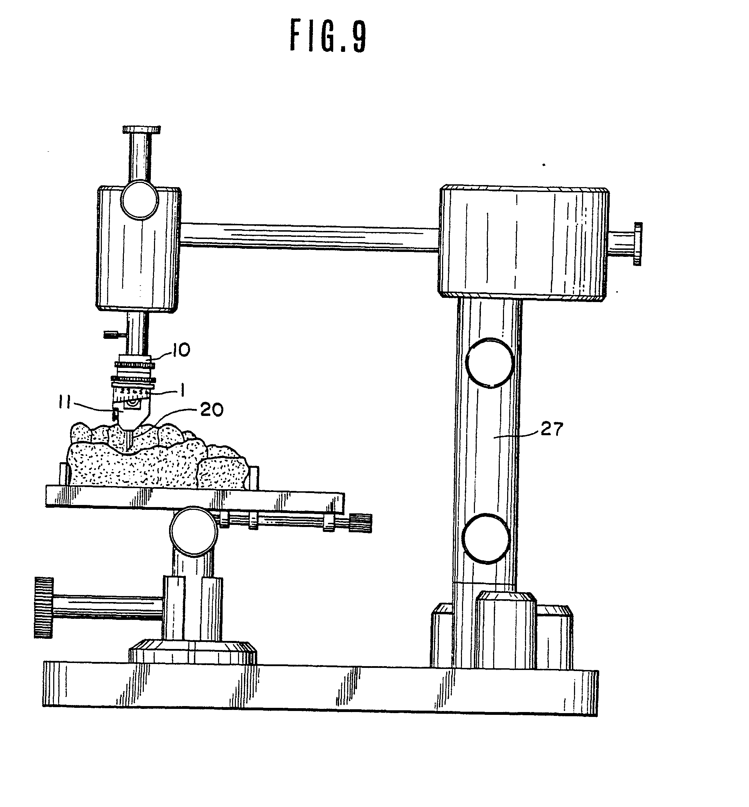

A tool 20 is first inserted into a drilled hole 21 on the tool holding plate and then it is firmly held thereon by tightening a set screw 23. The so prepared device is attached to a parallelometer 27 by inserting a shank 9 on the fitting means 10 into a collet of the parallelometer 27 (see Fig. 9). The device is displaced to the position located just in front of a plaster die to be inspected by actuating the parallel actuating mechanism of the parallelometer 27.

Prior to initiating a measuring operation the locking ring 8 is loosened so that the rotary ring 1 is easily rotated by an operator's hand. While this state is maintained, the tool 20 is brought into contact with the tapered surface of the plaster die. After having confirmed that the tool 20 assumes the position located in parallel to the tapered surface, the existing inclination angle of the tapered surface of the wax pattern relative to a vertical plane can be measured by reading the numeral on the mark which is located in vertical alignment with the reference line 26 marked on the outermost end face of the transversely extending shaft 16.

In this connection it should be noted that calibration of the device is carried out in such a manner that when the tool 20 assumes the vertical posture without any inclination as illustrated in Fig. 4 and 6(a), the zero degree mark is located in vertical alignment with the reference line 26 as is best seen from Fig. 2, when the rotary ring 1 is rotated by 90 degrees and the tool 20 is inclined by 7 degrees as illustrated in Fig. 6(b), the mark indicating 7 degrees is located in vertical alignment with the reference line 26 and when the rotary ring 1 is rotated by 180 degrees as illustrated in Fig. 3 and the tool 20 is inclined by 14 degrees as illustrated in Fig. 6(c), the mark indicating 14 degrees is located in vertical alignment with the reference line 26.

After the existing inclination angle of the tapered surface of the plaster die is measured, a scraping operation is carried out. The tool 20 is rearranged by manual operation such that it is inclined to a required inclination angle which is calculated in accordance with the Dr. Körber's "conus crown" theory and its cutting edge is oriented toward the tapered surface of the wax pattern. After completion of rearrangement the lock ring 8 is turned in the direction of locking. The whole device with the tool 20 inclined to the predetermined inclination angle is displaced toward the wax pattern by operating the parallel actuating mechanism of the parallelometer and scraping operation is then carried out by manually handling the device.

As described above, any inclination of the tool 20 in the range of 0 to 14 degrees can be obtained by rotating the rotary ring 1 at the most by 180 degrees corresponding to rotation of the latter by a half turn. Accordingly, calibration is required only over the half of the peripheral surface 24 of the rotary ring 1 but in the illustrated embodiment of the invention the same calibration is made over the other half of the peripheral surface 24 of the rotary ring 1 as is apparent from Figs. 2 and 8 in order to assure that the existing inclination angle can be read from any direction. To identify the direction of observation it is convenient that the marks on one half of the peripheral surface 24 of the rotary ring 1 are colored with black and those on the other half are colored with red.

The red colored reference line 26′ on the right hand outermost end face of the transversely extending shaft 16 as seen in the drawing is adapted to be located in vertical alignment with the red colored marks on the other half of the peripheral surface 24 of the rotary ring 1 so that the existing inclination angle of the tool can be easily recognized from the opposite direction.

While the present has been described above merely with respect to a single preferred embodiment, it should of course be understood that it should not be limited only to this but various changes or modifications may be made in a suitable manner without any departure from the scope of the invention as disclosed in the appended claims.

**Claims**

1. A device for measuring a first inclination angle of the tapered surface of a plaster die duplicated from a prepared tooth, said plaster die being mounted on the horizontal base table of a parallelometer, the measurement being based on the extent of the pivoting movement of a tool (20) in a vertical plane, which tool is secured to the mobile arm of the parallelometer by a tool holding means (11), and for scraping a wax pattern on the plaster die so as to fabricate a tapered conical crown with a second inclination angle for the purpose of retaining a partial denture, said device being characterized in that it comprises

— substantially vertical core means (2) to which said tool holding means (11) is connected by means of a support shaft (13) having an axis perpendicular to that of said core means (2) and about which said tool holding means can swivel, said tool holding means (11) having a pair of lateral projections (15, 15′),

— a rotary ring (1) rotatably fitted to said core means (2) so that said rotary ring (1) is coaxial with said core means (2), the lower planar end face of said rotary ring (1) forming a predetermined third inclination angle relative to the axis of the rotary ring, and said rotary ring (1) being provided with a measuring scale marked around its peripheral surface,

— resilient means (3) normally urging the rotary ring (1) towards the upper faces of the lateral projections (15, 15′) of said tool holding means (11),

— fitting means (9, 10) firmly fitted to said parallelometer (27) and threadably connected to said core means (2), which also acts as an abutment for said resilient means (3), and

— a lock ring (8) rotatably fitted to said core means (2) for inhibiting rotation of the rotary ring (1) when said tool holding means (11) is to be fixedly held.

2. Device according to Claim 1, characterized in that a shaft (16) is disposed between the lower inclined end face of the rotary ring (1) and the upper faces of the lateral projections (15, 15′) of said tool holding means (11), the axis of said shaft (16) intersecting perpendicularly with the axis of said support shaft (13), said shaft (16) acting as a bearing to avoid line contact between the lower inclined planar end face of the rotary ring and the upper faces of the lateral projections (15, 15′) of the tool holding means.

3. Device according to Claim 1 or 2, characterized in that the predetermined third inclination angle of the lower inclined end face of the rotary ring (1) is 7 degrees, that the upper faces of the lateral projections (15, 15′) of the tool holding means (11) together with said shaft (16) may be inclined to an inclination angle of 7 degrees to either side of a perpendicular to the axis of the core means (2), so that a tool attached to said tool holding means (11) is inclinable within a range of 0 to 14 degrees by rotating the rotary ring (1).

4. Device according to anyone of Claims 1 to 3, characterized in that each of the upper faces of the lateral projections of the tool holding means (11) is formed with a semi-cylindrical recess on which the end portions (19, 19′) of said shaft (16) are rotatably supported and each of said end portions (19, 19′) of the shaft (16) are cut to a planar face parallel to the longitudinal axis of said shaft with which the lower inclined end face of said rotary ring (1) is brought into slidable contact so that said shaft (16) turns within a certain angle as the rotary ring (1) is rotated.

5. Device according to anyone of Claims 1 to 4, characterized in that the resilient means comprises a coil spring (3) coaxial with said core means (2) and inserted into a hole (6) in a male thread portion of said core means (2), a ring-shaped washer (5) being fitted onto the male thread portion of said core means (2), said ring-shaped washer (5) having a pair of inward projections located diametrically opposite to one another, and an intermediate member (4) bridging between said inward projections of the ring-shaped washer (5), said coil spring (3) abutting against said intermediate member (4).

6. Device according to anyone of Claims 1 to 5, characterized in that said measuring scale comprises at least one set of marks (25) around the peripheral surface of said rotary ring (1) each set of marks extending around one half of the periphery and in that a reference line (26) locatable in vertical alignment with anyone of the marks (25) is marked on one of the end faces of said shaft (16).

7. Device according to Claim 6, characterized in that one set of marks (25, 25') is marked around each half of the peripheral surface of the rotary ring (1) and that a reference line (26, 26') locatable in vertical alignment with the corresponding set of marks (25, 25') is marked on each end face of said shaft (16).

8. Device according to Claim 7, characterized in that the sets of marks (25, 25') and the corresponding reference lines (26, 26') are marked with different colors.

**Patentansprüche**

1. Vorrichtung zum Messen eines ersten Neigungswinkels der schrägen Fläche eines Abdrucks, der von einem präparierten Zahn dupliziert und auf dem horizontalen Basistisch eines Parallelometers angeordnet ist, wobei die Messung auf dem Maß der Schwenkbewegung eines über eine Werkzeughaltevorrichtung (11) an dem bewegbaren Arm des Parallelometers befestigten Werkzeuges (20) in einer vertikalen Ebene basiert, und zum materialabnehmenden Bearbeiten eines Wachsmusters auf dem Abdruck, um eine schräge Konuskrone mit einem zweiten Neigungswinkel zum Halten eines partiellen künstlichen Gebisses herzustellen, dadurch gekennzeichnet, daß sie aufweist

— ein im wesentlichen vertikales Kernteil (2), mit dem die Werkzeughaltevorrichtung (11) über einen Haltestift (13) verbunden ist, der eine Achse aufweist, die rechtwinklig zu derjenigen des Kernteils (2) ist und um die die Werkzeughaltevorrichtung schwenkbar ist, wobei die Werkzeughaltevorrichtung (11) ein Paar laterale Vorsprünge (15, 15') aufweist,
— einen Drehring (1), der derart drehbar an dem Kernteil (2) angebracht ist, daß Drehring (1) koaxial mit dem Kernteil (2) ist, wobei die untere planare Stirnfläche des Drehrings (1) einen vorbestimmten dritten Neigungswinkel relativ zu der Achse des Drehrings bildet und der Drehring (1) mit einer um seine Umfangsfläche markierten Meßskala versehen ist,
— eine Federvorrichtung (3), die den Drehring (1) normalerweise gegen die oberen Flächen der lateralen Vorsprünge (15, 15') der Werkzeughaltevorrichtung (11) drückt,
— eine Befestigungsvorrichtung (9, 10), die fest an dem Parallelometer (27) angebracht und auf das Kernteil (2) aufschraubbar ist und als Anschlag für die Federvorrichtung (3) wirkt, und
— einen drehbar an dem Kernteil (2) angebrachten Feststellring (8) zum Verhindern einer Drehung des Drehrings (1), wenn die Werkzeughaltevorrichtung (11) ortsfest zu halten ist.

2. Vorrichtung nach Anspruch 1, dadurch gekennzeichnet, daß zwischen der unteren schrägen Stirnfläche des Drehrings (1) und den oberen Flächen der lateralen Vorsprünge (15, 15') der Werkzeughaltevorrichtung (11) ein Stift (16) angeordnet ist, dessen Achse die Achse des Haltestiftes (13) rechtwinklig schneidet und der als Lager wirkt, um einen Linienkontakt zwischen der unteren, schrägen, ebenen Stirnfläche des Drehrings und den oberen Flächen der seitlichen Vorsprünge (15, 15') der Werkzeughaltevorrichtung (11) zu vermeiden.

3. Vorrichtung nach Anspruch 1 oder 2, dadurch gekennzeichnet, daß der vorbestimmte dritte Neigungswinkel der unteren schrägen Stirnfläche des Drehrings (1) 7° beträgt, daß die oberen Flächen der lateralen Vorsprünge (15, 15') der Werkzeughaltevorrichtung (11) zusammen mit dem Stift (16) bis zu einem Neigungswinkel von 7° zu beiden Seiten einer Senkrechten zur Achse des Kernteils (2) geneigt werden können, so daß ein an der Werkzeughaltevorrichtung (11) angebrachtes Werkzeug durch Drehen des Drehrings (1) innerhalb eines Bereiches von 0° bis 14° schrägstellbar ist.

4. Vorrichtung nach einem der Ansprüche 1 bis 3, dadurch gekennzeichnet, daß an jeder der oberen Flächen der lateralen Vorsprünge der Werkzeughaltevorrichtung (11) eine halbzylindrische Vertiefung ausgebildet ist, auf der die Enden (19, 19') des Stiftes (16) drehbar gehalten sind und jedes der Enden (19, 19') des Stiftes (16) in einer ebenen Fläche abgeschnitten ist, die parallel zur Längsachse des Stiftes ist und mit der die untere schräge Stirnfläche des Drehrings (1) in Gleitkontakt gebracht ist, so daß sich der Stift (16) innerhalb eines bestimmten Winkels bei Drehung des Rings (1) dreht.

5. Vorrichtung nach einem der Ansprüche 1 bis 4, dadurch gekennzeichnet, daß die Federvorrichtung (3) eine Schraubenfeder (3) aufweist, die koaxial mit dem Kernteil (2) und in ein Loch (6) in einem männlichen Gewindeteil des Kernteils (2) eingesetzt ist, wobei auf dem männlichen Gewindeteil des Kernteils (2) eine ringförmige Unterlegscheibe (5) aufliegt, die ein Paar nach innen gerichtete diametral einander gegeüberliegende Vorsprünge aufweist, und ein Zwischenelement (4) sich zwischen den nach innen gerichteten Vorsprüngen der ringförmigen Unterlegscheibe (5) erstreckt, wobei sich die Schraubenfeder (3) gegen das Zwischenelement (4) abstützt.

6. Vorrichtung nach einem der Ansprüche 1 bis 5, dadurch gekennzeichnet, daß die Meßskala mindestens einen Satz von Markierungen (25) um die Umfangsfläche des Drehrings (1) aufweist, wobei sich jeder Satz von Markierungen um eine Hälfte des Umfangs erstreckt, und daß eine Referenzlinie (26), die vertikal zu einer der Markierungen (25) ausrichtbar ist, auf einer der Stirnflächen des Stiftes (16) markiert ist.

7. Vorrichtung nach Anspruch 6, dadurch gekennzeichnet, daß ein Satz von Markierungen (25, 25') um jede Hälfte der Umfangsfläche des Drehrings (1) markiert ist und daß eine Referenzlinie (26, 26'), die vertikal zu dem entsprechenden Satz von Markierungen (25, 25') ausrichtbar ist, auf jeder Stirnfläche des Stiftes (16) markiert ist.

8. Vorrichtung nach Anspruch 7, dadurch gekennzeichnet, daß die Sätze von Markierungen (25, 25') und die zugehörigen Referenzlinien (26, 26') mit verschiedenen Farben gekennzeichnet sind.

**Revendications**

1. Dispositif permettant de mesurer un premier angle d'inclinaison de la surface inclinée d'un modéle en plâtre obtenu par reproduction d'une dent préparée, ce modéle en plâtre étant monté sur le plateau horizontal d'un parallèliseur, la mesure étant basée sur l'étendue du mouvement de pivotement d'un outil (20) dans un plan vertical, cet outil étant fixé sur le bras mobile du parallèliseur à l'aide d'un port outil (11), et permettant de sculpter une empreinte en cire sur ce modéle en plâtre de façon à fabriquer une couronne tronconique présentant un second angle d'inclinaison et servant à retenir un dentier partiel, ce dispositif étant caractérisé en ce qu'il comprend:

— un noyau sensiblement vertical (2) auquel ledit porte-outil (11) est lié à l'aide d'un arbre de support (13) présentant un axe perpendiculaire à celui du noyau (2) et autour duquel le porte-outil peut basculer, ce porte-outil (11) présentant une paire de saillies latérales (15, 15'),
— une bague rotative (1) montée à rotation sur le noyau (2) de façon que cette bague rotative (1) soit coaxiale à ce noyau (2), la face extrême inférieure plane de cette bague rotative (1) formant un troisième angle préfixé d'inclinaison par rapport à l'axe de la bague rotative, et cette bague rotative (1) étant munie d'une échelle de mesure marquée tout autour de sa surface périphérique,
— des moyens élastiques (3) repoussant normalement la bague rotative (1) en direction des faces supérieures des saillies latérales (15, 15') du porte-outil (11),
— des moyens de fixation (9, 10) fixés à demeure sur le parallèliseur (27) et reliés par vissage audit noyau (2) qui sert également de butée pour les moyens élastiques (3), et,
— une bague de verrouillage (8) montée à rotation sur le noyau (2) de façon à empêcher une rotation de la bague rotative (1) lorsque le porte-outil (11) doit être maintenu fixe.

2. Dispositif selon la revendication 1, caractérisé en ce qu'un arbre (16) est disposé entre la face extrême inférieure inclinée de la bague rotative (1) et les faces supérieures des saillies latérales (15, 15') dudit porte-outil (11), l'axe de cet arbre (16) coupant de manière perpendiculaire l'axe de l'arbre de support (13), ledit arbre (16) servant de palier afin d'éviter un contact linéaire entre la face extrême inférieure plane et inclinée de la bague rotative et les faces supérieures des saillies latérales (15, 15') du porte-outil.

3. Dispositif selon la revendication 1 ou 2, caractérisé en ce que le troisième angle préfixé d'inclinaison de la face extrême inférieure inclinée de la bague rotative (1) est de 7 degrés et en ce que les faces supérieures des saillies latérales (15, 15') du porte-outil (11) peuvent, en même temps que ledit arbre (16), être inclinées sous un angle d'inclinaison de 7 degrés sur l'un ou l'autre côté d'une perpendiculaire à l'axe du noyau (2), de sorte qu'un outil fixé sur ledit porte-outil (11) peut être incliné dans une fourchette de 0 à 14 degrés en faisant tourner la bague rotative (1).

4. Dispositif selon l'une quelconque des revendications 1 à 3, caractérisé en ce chacune des faces supérieures des saillies latérales du porte-outil (11) présente une cavité semi-cylindrique sur laquelle sont portées à rotation les parties extrémes (19, 19') dudit arbre (16) et en ce que chacune de ces parties extrémes (19, 19') de l'arbre (16) sont découpées suivant une face plane qui est parallèle à l'axe longitudinal de cet arbre et avec laquelle la face extrême inférieure inclinée de la bague rotative (1) est amenée en contact coulissant de façon que ledit arbre (10) tourne à l'intérieur d'un certain angle lorsqu'on fait tourner cette bague rotative (1).

5. Dispositif selon l'une quelconque des revendications 1 à 4, caractérisé en ce que les moyens élastiques comprennent un ressort hélicoidal (3) coaxial au noyau (2) et introduit dans un trou (6) ménagé dans une partie filetée mâle du noyau (2), une rondelle de forme annulaire (5) étant engagée sur cette partie filetée mâle du noyau (2), cette rondelle annulaire (5) présentant une paire de saillies dirigées vers l'intérieur et disposées en des positions diamétralement opposées l'une par rapport à l'autre, et une pièce intermédiaire (4) faisant pont entre lesdites saillies intérieures de la rondelle annulaire (5), le ressort hélicoidal (3) venant en butée contre cette pièce intermédiaire (4).

6. Dispositif selon l'une quelconque des revendications 1 à 5, caractérisé en ce que ladite échelle de mesure comprend au moins un jeu de marques (25) disposées autour de la surface périphérique de la bague rotative (1), chaque jeu de marques s'étendant sur une moitié de la périphérie, et en ce qu'une ligne de référence (26) pouvant être placée en alignement vertical avec n'importe laquelle des marques (25) est marquée sur l'une des faces extrêmes dudit arbre (16).

7. Dispositif selon la revendicatoin 6, caractérisé en ce qu'un jeu de marques (25, 25') est marqué sur chaque moitié de la surface périphérique de la bague rotative (1) et en ce qu'une ligne de référence (26, 26') pouvant être placée en alignement vertical avec le jeu correspondant de marques (25, 25'), est marquée sur chaque face extrême dudit arbre (16).

8. Dispositif selon la revendication 7, caractérisé en ce que les jeux de marques (25, 25′) et les lignes correspondantes de référence (26, 26′) sont marqués dans des couleurs différentes.

FIG.1

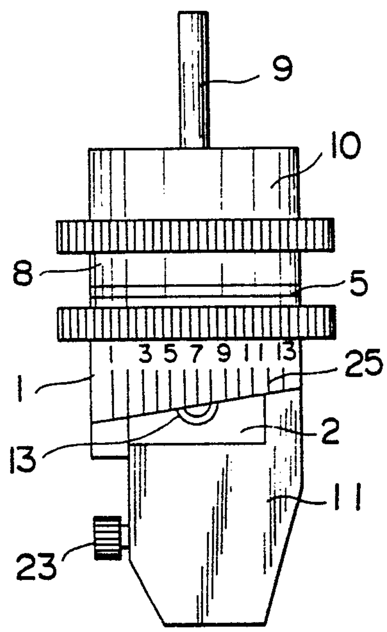


FIG.2

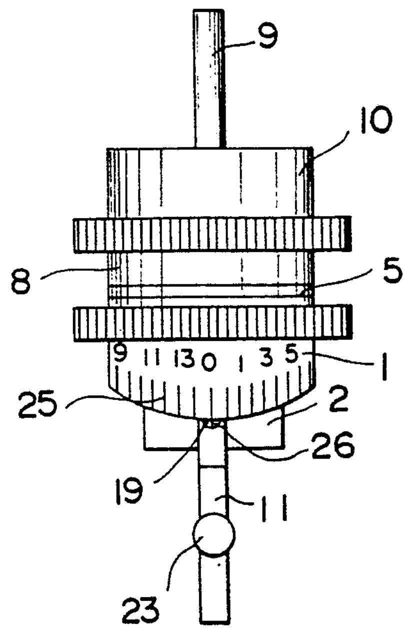


FIG.3

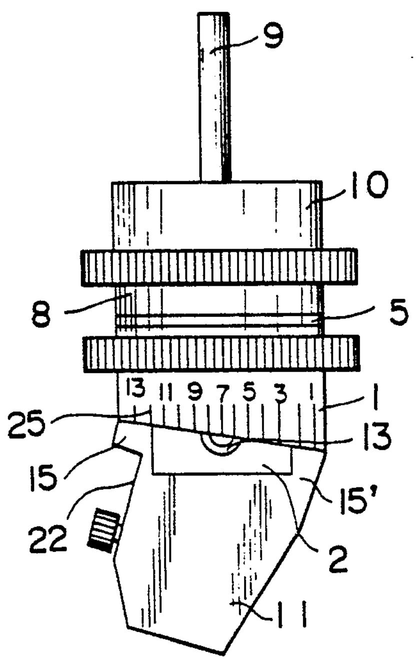

FIG.4

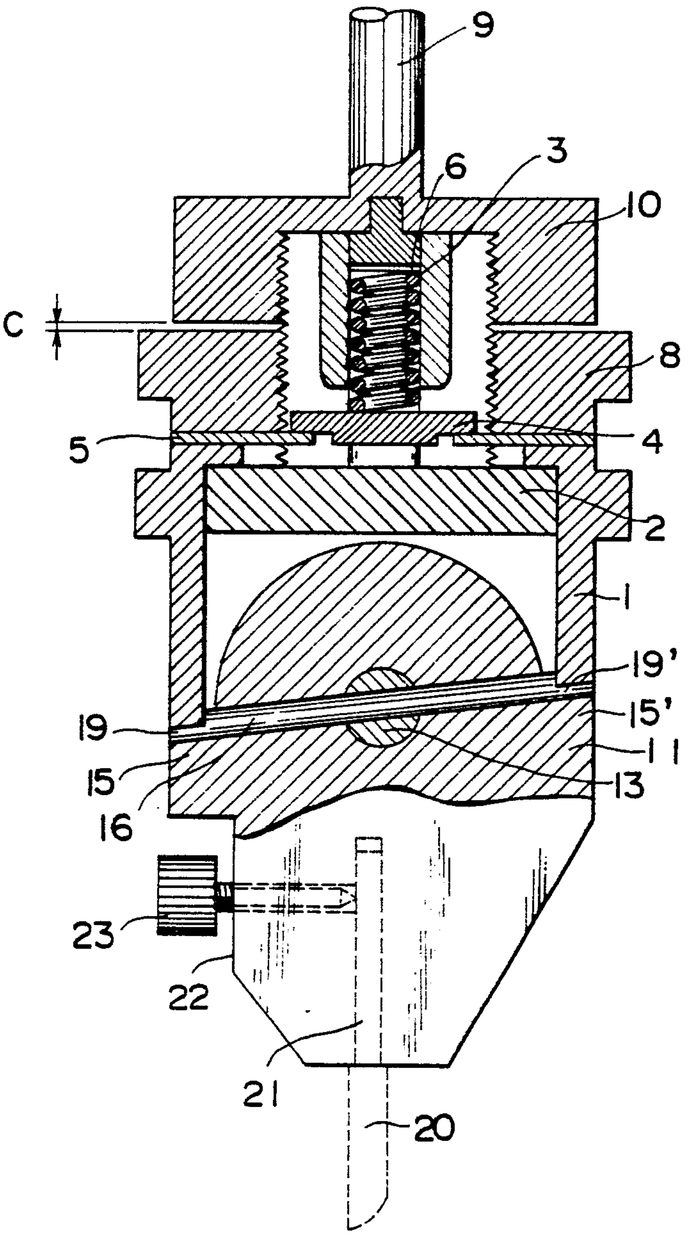

FIG.5

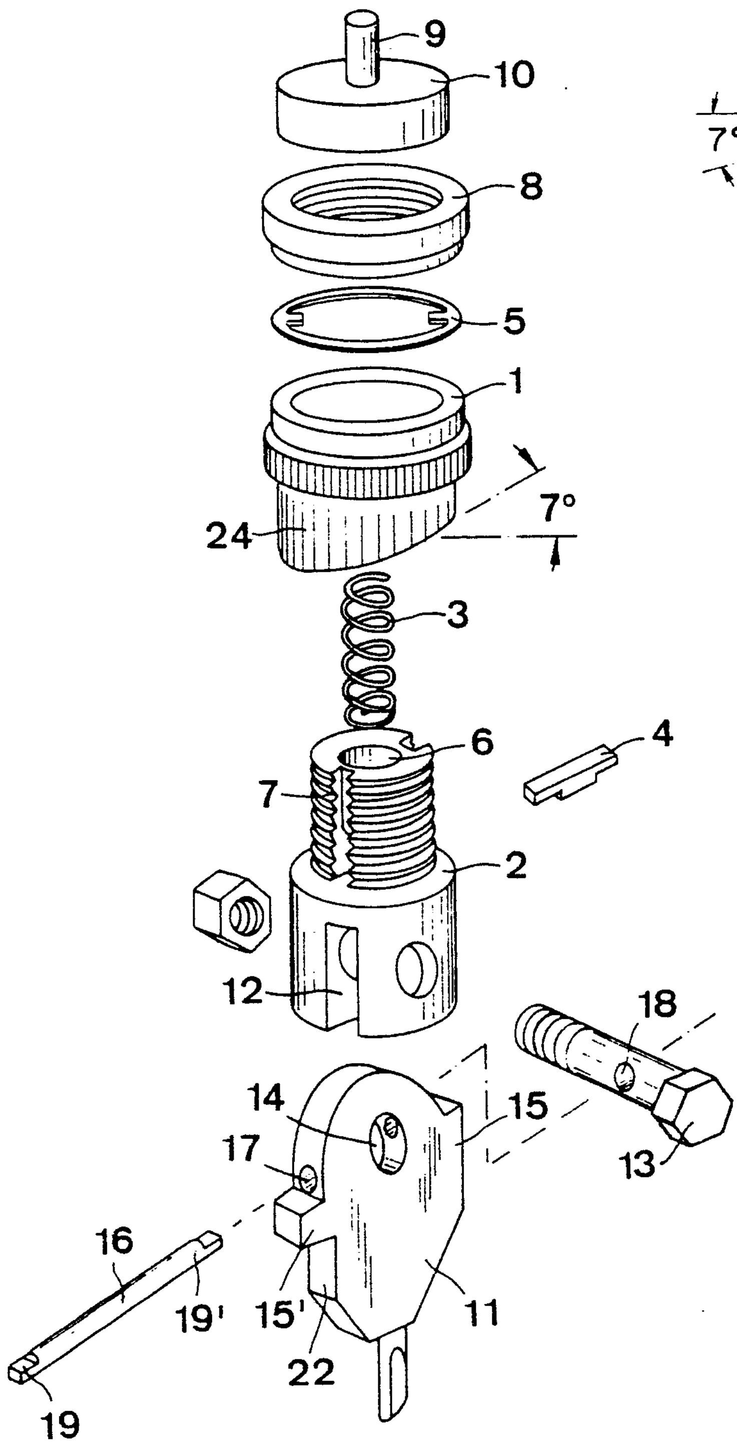


FIG.6 (a)

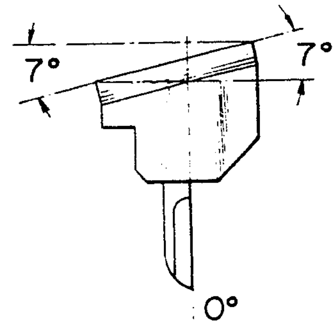


FIG.6 (b)

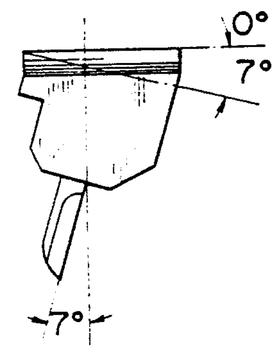


FIG.6 (c)

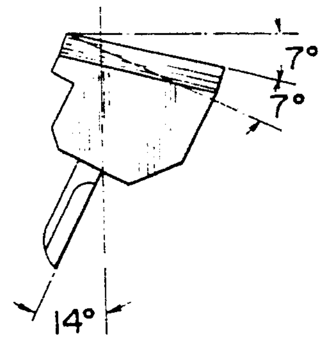

FIG.7

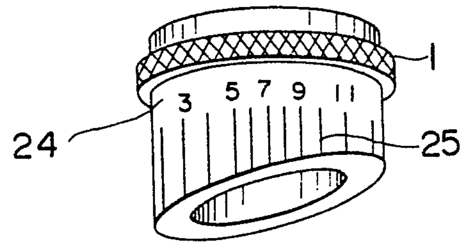


FIG.8

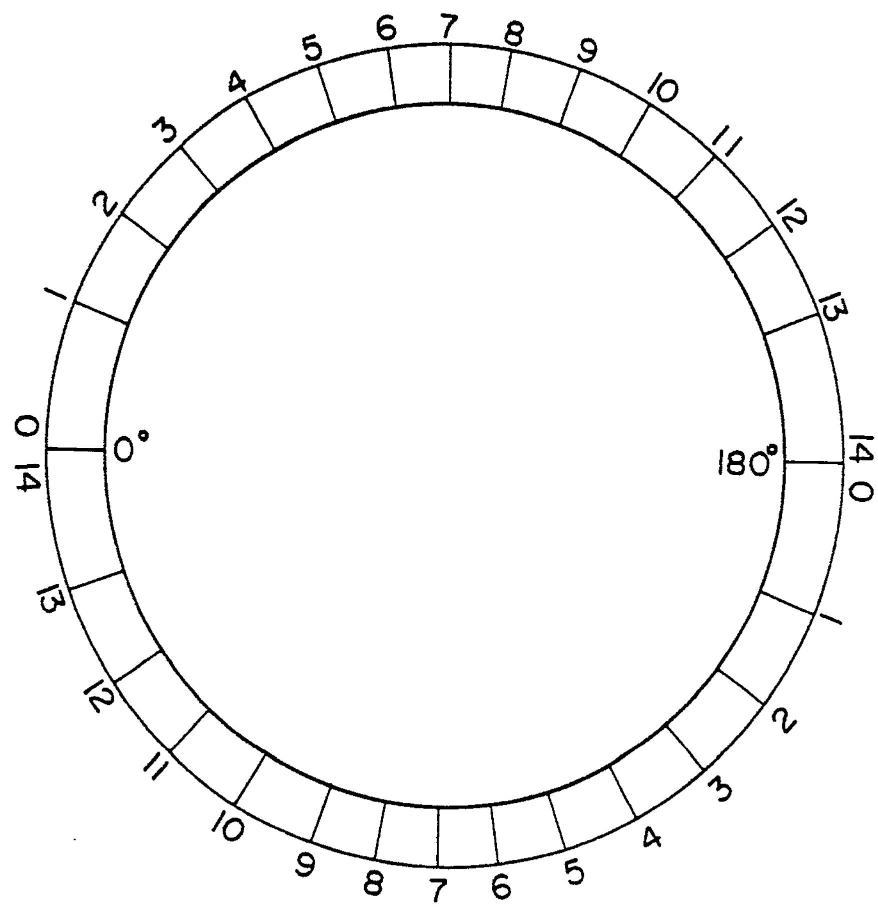

FIG.9